# EUROPÄISCHE PATENTSCHRIFT

(11) **EP 2 375 852 B1**
(45) Veröffentlichungstag und Bekanntmachung des Hinweises auf die Patenterteilung: **08.08.2018**
(21) Anmeldenummer: 06125661.6
(22) Anmeldetag: 08.12.2006
(51) Int. Cl.: H04W 36/02, H04M 7/00

(54) **Kommunikationsendgerät und Verfahren zur Datenübertragung zwischen einem Kommunikationsendgerät und einem Kommunikationssystem in einem Datennetz**
Communication terminal and method for transmitting data between a communication terminal and a communication system in a data network
Terminal de communications et méthode pour transmettre des données entre un terminal de communications et un système de communications dans un réseau de données

(30) Priorität: 08.12.2005 DE 102005058710
(43) Veröffentlichungstag der Anmeldung: 12.10.2011
(73) Patentinhaber: QUALCOMM Incorporated, San Diego, CA 92121-1714 (US)
(72) Erfinder: Koora, Kalyan, 46395 Bocholt (DE); Naumann, Mirko, 82538 Gerestsried (DE)
(74) Vertreter: Dunlop, Hugh Christopher

(56) Entgegenhaltungen:
- US-A1- 2005 141 456
- US-A1- 2005 249 161
- IEEE STANDARDS DEPARTMENT: "Draft IEEE Standard for Local and Metropolitan Area Networks: Media Independent Handover Services; IEEE P802.21/D00.03; October 2005" IEEE INTERNATIONAL CONFERENCE ON WIRELESS AND MOBILE COMPUTING, NETWORKING AND COMMUNICATIONS (WIMOB), X, XX, 1. Oktober 2005 (2005-10-01), Seiten 1-150, XP002518219

## Beschreibung

Die Erfindung betrifft ein Kommunikationsendgerät, welches eine erste und zumindest eine zweite Kommunikationsschnittstelle zur Kommunikation mit einem Kommunikationssystem aufweist. Des Weiteren umfasst das Kommunikationsendgerät ein Transportprotokollmodul zum Übertragen von Nutzdaten zwischen dem Kommunikationsendgerät und dem Kommunikationssystem über zumindest eine der beiden Kommunikationsschnittstellen. Des Weiteren betrifft die Erfindung ein Verfahren zur Datenübertragung zwischen einem Kommunikationsendgerät und einem Kommunikationssystem in einem Datennetz, wobei die Datenübertragung über eine erste oder eine zweite Kommunikationsschnittstelle durchgeführt wird und Nutzdaten über eine der beiden Kommunikationsschnittstellen über ein Transportprotokollmodul des Kommunikationsendgeräts übertragen werden.

Allgemein bekannt ist das Übertragen von Informationen, insbesondere von Signalisierungen und Daten über eine Verbindung in einem öffentlichen Netz zwischen zwei Datenendeinrichtungen. Zur Steuerung des Verbindungsaufbaus und der Übertragung wird für eine logische und/oder physikalische Verbindung zumindest ein Protokoll verwendet. Allgemein bekannte Protokolle sind das sogenannte Session Initiation Protocol (SIP) als Signalisierungsprotokoll zwischen derartigen Datenendeinrichtungen. Eine Verbindung gemäß SIP kann als gesicherte Verbindung zwischen den Datenendeinrichtungen und gegebenenfalls einer Vielzahl zwischen diesen angeordneten Zwischenstationen, wie z. B. sogenannten Proxy-Servern (Proxys) und Registrierungsrechnern eingerichtet werden.

Sollen Informationen über eine Verbindung zwischen zwei Datenendeinrichtungen übertragen werden, wird zwischen den beiden Datenendeinrichtungen eine Verbindung aufgebaut, wobei dafür zum Steuern/Signalisieren ein erstes Protokoll, beispielsweise das SIP, verwendet wird. Dies ermöglicht den Aufbau einer Verbindung für die Signalisierung und den Aufbau der eigentlichen Übertragungsverbindung als einer zweiten Verbindung zwischen den beiden Datenendeinrichtungen. Über die erste gesicherte Verbindung wird der Standort bzw. eine temporäre Internetadresse einer einzuladenden Datenendeinrichtung ermittelt, um dieser eine Einladung zum Verbindungsaufbau zu übertragen. Nach dem Zurücksenden einer Bestätigungsnachricht kann dann eine direkte und einfach verwaltete Internetverbindung zwischen den beiden Datenendeinrichtungen aufgebaut werden. Dies erfolgt über die zweite Verbindung mit einem eigenen Protokoll. Zu Beginn der Übertragung von Informationen über die zweite Verbindung werden zwischen den beiden Datenendeinrichtungen Zertifikate und/oder Schlüssel ausgetauscht, um die nachfolgende Übertragung von Daten, insbesondere Nutzdaten bzw. Anwenderdaten, als Informationen mit Hilfe dieser Zertifikate und/oder Schlüssel absichern zu können.

Allgemein bekannt sind funkgestützte Datennetze, beispielsweise das sogenannte Wireless Local Area Network (WLAN), welches eine Kommunikation von Teilnehmern gemäß den Richtlinien des Internetprotokolls (IP) ermöglicht.

In der gegenwärtigen Internetkommunikation gibt es eine Mehrzahl an Applikationen bzw. Anwendungen, welche auf dem Internetprotokoll (IP) basieren. Multimediaapplikationen ermöglichen das Erzeugen einer aktiven Sitzungsverbindung zwischen zwei Kommunikationspartnern über eine IP-Adresse. Anzumerken ist jedoch, dass die allgemeinen IP-basierten Applikationen grundsätzlich nur dann funktionieren, wenn die IP-Adresse der Kommunikationspartner während einer derartigen aktiven Sitzungsverbindung unverändert bleibt. Ist ein Kommunikationspartner als mobiles Kommunikationsendgerät ausgebildet, wird sich beim mobilen Einsatz auch seine IP-Adresse üblicherweise zeitweise ändern. Somit kann eine Kommunikation zwischen zwei Kommunikationspartnern nur so lange durchgeführt werden, so lange die IP-Adressen der beiden Kommunikationspartnern unverändert bleiben, wobei beim Ändern der IP-Adressen eine Sitzungsverbindung wieder hergestellt werden muss. Um ein derartiges Problem lösen zu können, wurde das SIP eingeführt, welches mit einer zentralen Einrichtung, beispielsweise einem IMS (IP Multimedia System)-Server, kommuniziert. Dieser IMS-Server aktualisiert die IP-Adressen der Kommunikationspartner zusammen mit ihren SIP-Adressen. Das SIP ist unabhängig von dem Transportprotokoll in den unteren Schichten des OSI-Modells, wodurch die Vorteile der neueren Transportprotokolle ausgenützt werden können.

In einer mobilen Umgebung mit mobilen Terminals weist jeder Terminal eine Mehrzahl an Schnittstellen, beispielsweise WLAN, UMTS, GPRS etc. auf. Derartige Terminals mit mehreren Schnittstellen werden als Multimode-Terminal (MMT) bezeichnet. Ein IMS-Server ist dabei über diese Mehrzahl an Schnittstellen erreichbar. Falls es notwendig oder durch einen Operator vorgesehen ist, dass für den Signalisierungsprozess eine andere Schnittstelle als für den Austausch der Nutzdaten vorgesehen ist, ist es erforderlich, dass die Applikation dies ermöglicht und durchführen kann. Es kann beispielsweise vorgesehen sein, dass die SIP-Signalisierung über eine GPRS-Kommunikationsschnittstelle übertragen wird, wobei andererseits die Nutzdaten über eine Voice-Over-IP (VoIP)-Sitzungsverbindung über eine vorhandene WLAN-Kommunikationsschnittstelle übertragen wird. Die Applikation muss dabei derart ausgebildet sein, dass sie grundsätzlich die Existenz unterschiedlicher Kommunikationsschnittstellen erkennt und darüber hinaus weiß, welche Kommunikationsschnittstelle für welchen Service und für welchen Signalaustausch verwendet wird.

Um diese Anforderungen organisieren und ausführen zu können, muss die Applikation problemspezifische Anforderungen implementieren. Dies ist jedoch dahingehend nachteilig, dass Probleme mit Vorläuferapplikationen auftreten können und Entwickler bereits bei der Auslegung und Konzeptionierung entscheiden und festlegen müssen, ob eine Applikation auf einem MMT oder einem Terminal mit lediglich einer Kommunikationsschnittstelle ablaufen soll. Darüber hinaus ist das Wissen über die Existenz von mehreren Kommunikationsschnittstellen als allgemeine Information nicht ausreichend. Vielmehr ist es erforderlich, dass die Applikation weiß, welche Kommunikationsschnittstelle die beste für den durchzuführenden Service bzw. die durchzuführende Anforderung ist. Besonders problematisch ist die Wiederherstellung einer Sitzungsverbindung für eine Applikation dann, wenn die Kommunikationsschnittstelle, über welche die Sitzungsverbindung läuft, beispielsweise aufgrund einer zu niedrigen Signalstärke, verloren wird. Um auch darüber informiert zu werden, muss die Applikation eine spezielle Kommunikationsschnittstelle implementieren, über welche die Verbindungsebene die Applikation über die verlorene Verbindungsmöglichkeit informiert.

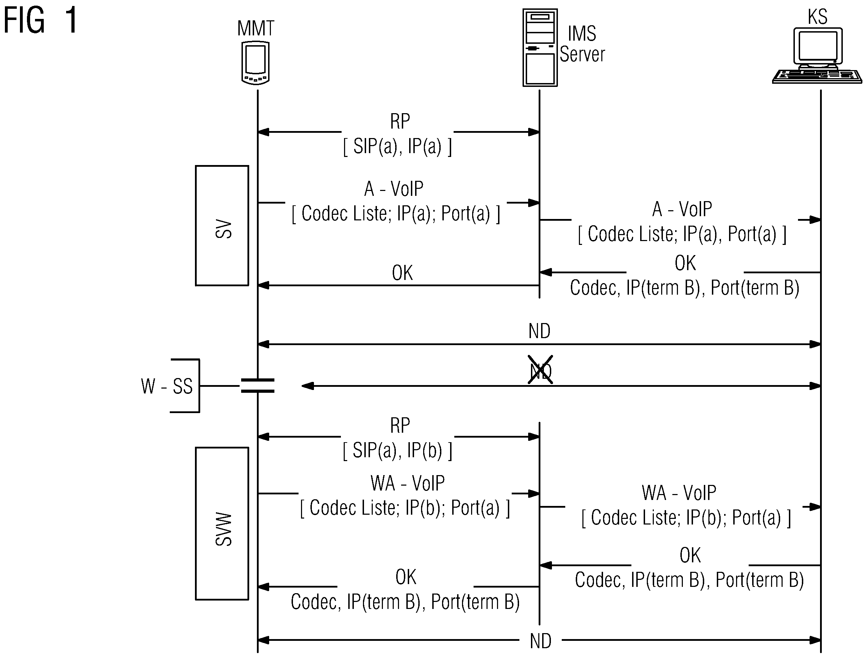

In FIG 1 ist ein aus dem Stand der Technik bekanntes Prinzip einer Kommunikation zwischen einem Kommunikationsendgerät, welches als MMT ausgebildet ist, und einem Kommunikationssystem KS dargestellt. Das Kommunikationsendgerät MMT bezeichnet ein Terminal A und das Kommunikationssystem KS bezeichnet ein Terminal B. Zum Aufbau einer Kommunikation wird eine erste aktive Verbindung aufgebaut, über welche ein Registrierungsprozess RP über einen IMS-Server durchgeführt wird. Dabei sendet das Kommunikationsendgerät MMT als Registrierungsinformationen ein Signalisierungsprotokoll SIP(a) und ein Internetprotokoll IP(a). Zum weiteren Aufbau einer Sitzungsverbindung SV wird vom MMT ein Befehl A-VoIP zum Aufruf einer Voice-over-IP Kommunikation mit dem Terminal B bzw. dem Kommunikationssystem KS an den IMS-Server gesendet. Dazu werden als Informationen eine Codec-Liste, das Internetprotokoll IP(a) sowie Informationen über einen Port gesendet. Diese Informationen werden vom IMS-Server an das Kommunikationssystem KS weitergeleitet. Zum Anzeigen der Bereitschaft zum Durchführen einer Kommunikation sendet dann das Kommunikationssystem KS eine Information OK, welche Codec-Informationen, das Internetprotokoll IP(term B) des Terminals B sowie Portinformationen Port(term B)des Terminals B enthalten, an den IMS-Server. Der IMS-Server leitet diese Informationen des Kommunikationssystems KS an das Terminal A bzw. an das Kommunikationsendgerät MMT weiter. Die Registrierung und Signalisierung ist damit abgeschlossen. Darüber hinaus können dann die Nutzerdaten ND zwischen dem als MMT ausgebildeten Kommunikationsendgerät und dem Kommunikationssystem KS ausgetauscht werden.

Wie aus der Darstellung in FIG 1 zu erkennen ist, wird der Austausch der Nutzdaten ND zwischen dem MMT und dem Kommunikationssystem KS unterbrochen (dargestellt durch das durchgestrichene Bezugszeichen ND), wenn sich die IP-Adresse des MMT ändert bzw. wenn ein Schnittstellenwechsel W-SS zum Austausch der Daten erfolgt. Wie des Weiteren aus der Darstellung in FIG 1 zu entnehmen ist, ist dann nachfolgend wiederum ein Registrierungs- und Signalisierungsprozess RP einzuleiten, um eine weitere Kommunikation zwischen dem MMT und dem Kommunikationssystem KS durchführen zu können. Der Wiederaufbau einer neuen Sitzungsverbindung SVW ist erforderlich. Dabei werden als Informationen ein Signalisierungsprotokoll SIP(a) und ein weiteres Internetprotokoll IP(b) zwischen dem IMS-Server und dem MMT übertragen. Des Weiteren wird ein Wiederaufrufbefehl WA-VoIP vom MMT über den IMS-Server zum Kommunikationssystem KS übertragen. Dazu werden eine Codec-Liste, das Internetprotokoll IP(b) und die Portinformationen Port(a) übertragen.

Obwohl somit durch SIP auch bei mobilen Kommunikationsendgeräten eine Kommunikation mit einem Kommunikationssystem KS beim Abbruch einer Verbindung bzw. bei dem Verlieren einer Kommunikationsverbindung über eine Kommunikationsschnittstelle wieder hergestellt werden kann, ist es dennoch im Stand der Technik erforderlich, diese Wiederherstellung der aktiven Verbindung durch den Nutzer direkt durchzuführen. Der Nutzer hat somit die Wiederherstellung einer Verbindung über eine neue Kommunikationsschnittstelle durch ein erforderliches direktes Einleiten durch den Nutzer selbst durchzuführen.

Der Standardentwurf "IEEE P802.21/D00.03 Draft IEEE Standard for Local and Metropolitan Area Networks: Media Independent Handover Services", Oktober 2005 offenbart die Datenübertragung zwischen einem Kommunikationsendgerät und einem Kommunikationssystem in einem Kommunikationsnetzwerk. Das Kommunikationsendgerät weist erste und zweite Kommunikationsschnittstellen und ein Transportprotokollmodul auf. Ferner ist ein Kommunikationsmodul offenbart, dass zwischen dem Transportprotokollmodul und den Kommunikationsschnittstellen angeordnet ist. Das Kommunikationsmodul dient als Schnittstelle zur Kommunikation zwischen dem Transportprotokollmodul und den Kommunikationsschnittstellen. Das Kommunikationsendgerät entscheidet über einen Wechsel zwischen den beiden Kommunikationsschnittstellen ("Handover") und führt diesen auch durch.

Daher ist es Aufgabe der vorliegenden Erfindung, ein Kommunikationsendgerät zu schaffen, bei dem eine Kommunikation mit einem Kommunikationssystem über eine Mehrzahl an Kommunikationsschnittstellen ermöglicht wird und bei dem eine zuverlässige Kommunikation auch dann gewährleistet werden kann, wenn zur Kommunikation ein Wechsel der Kommunikationsschnittstellen durchgeführt wird. Insbesondere ist es Aufgabe der Erfindung, einen Nutzdatenaustausch zwischen dem Kommunikationsgerät und einem Kommunikationssystem sicher und zuverlässig durchführen zu können, wenn die Kommunikationsschnittstellen gewechselt werden. Des Weiteren ist es Aufgabe der vorliegenden Erfindung, ein Verfahren zur Datenübertragung zwischen einem Kommunikationsendgerät und einem Kommunikationssystem mit einem Datennetz zu schaffen, bei dem eine Informationsübertragung beim Wechsel einer Kommunikationsschnittstelle sicher durchgeführt werden kann.

Diese Aufgaben werden durch ein Kommunikationsendgerät, welches die Merkmale nach Patentanspruch 1 aufweist, und ein Verfahren, welches die Merkmale nach Patentanspruch 13 aufweist, gelöst.

Ein Kommunikationsendgerät umfasst dabei eine erste und zumindest eine zweite Kommunikationsschnittstelle zur Kommunikation mit einem Kommunikationssystem. Des Weiteren weist das Kommunikationsendgerät ein Transportprotokollmodul zum Übertragen von Nutzdaten zwischen dem Kommunikationsendgerät und dem Kommunikationssystem über zumindest eine der beiden Kommunikationsschnittstellen auf. Ein wesentlicher Gedanke der Erfindung besteht darin, dass ein Kommunikationsmodul zwischen dem Transportprotokollmodul und den beiden Kommunikationsschnittstellen angeordnet ist, und derart ausgebildet ist, dass eine über eine der beiden Kommunikationsschnittstellen zwischen dem Kommunikationsendgerät und dem Kommunikationssystem aufgebaute aktive Sitzungsverbindung ohne Unterbrechung dieser aktiven Sitzungsverbindung als aktive Sitzungsverbindung zwischen dem Kommunikationsendgerät und dem Kommunikationssystem über die andere Kommunikationsschnittstelle übergebbar ist. Dadurch kann ein Kommunikationsendgerät geschaffen werden, welches eine verbesserte Kommunikation mit einem Kommunikationssystem beim Wechsel einer Kommunikationsschnittstelle zur Kommunikation miteinander ermöglicht. Insbesondere ein Nutzdatenaustausch, bspw. in Form von Video- und/oder Audiodaten kann somit in zuverlässiger Weise auch beim mobilen Einsatz des Kommunikationsendgeräts erfolgen.

In bevorzugter Weise ist das Kommunikationsmodul zum automatischen Aufrechterhalten der aktiven Sitzungsverbindung beim Übergeben von einer der Kommunikationsschnittstellen auf die andere Kommunikationsschnittstelle ausgebildet. Dadurch kann erreicht werden, dass in sicherer Weise ein Abbruch der Verbindung verhindert wird und ohne aktiven Eingriff eines Nutzers Aufrechterhalten werden kann.

Das Kommunikationsmodul ist in vorteilhafter Weise zum Aufrechterhalten der aktiven Sitzungsverbindung beim Wechsel der Kommunikationsschnittstelle derart ausgebildet, dass ein Wiederaufrufbefehl an das Kommunikationssystem automatisch gesendet wird. Das Kommunikationsmodul ermöglicht somit die stetige Verbindung zum Kommunikationssystem auch dann, wenn zum Durchführen der Kommunikation die Kommunikationsschnittstelle aufgrund von Prioritätsbedingungen gewechselt wird.

In bevorzugter Weise ist das Kommunikationsmodul als lokaler Proxy-Server ausgebildet. Besonders vorteilhaft erweist es sich, wenn das Kommunikationsmodul als lokaler SIP-Proxy-Server ausgebildet ist. Die Ausgestaltung als Proxy-Server optimiert die Anwendung des Kommunikationsmoduls im Hinblick auf die Übergabe einer aktiven Sitzungsverbindung ohne das eine Unterbrechung hervorgerufen wird.

Das Transportprotokollmodul ist in vorteilhafter Ausführung zwischen dem Kommunikationsmodul und einem Applikationsmodul angeordnet, wobei das Transportprotokollmodul zum Austausch von Nutzdaten mit dem Applikationsmodul ausgebildet ist. Das Applikationsmodul in vorteilhafter Weise als SIP-Applikationsmodul ausgebildet.

Das Kommunikationsmodul ist bevorzugt zum Austausch von Registrierungsinformationen des Kommunikationsendgeräts und des Kommunikationssystems ausgebildet. Die Registrierungsinformationen sind in vorteilhafter Weise zwischen dem Kommunikationsendgerät und dem Kommunikationssystem über einen separaten Server, insbesondere einen IMS-Server, austauschbar.

Das Kommunikationsmodul ist in bevorzugter Weise derart ausgebildet, dass die Registrierungsinformationen bei einer Übergabe der aktiven Sitzungsverbindung von einer Kommunikationsschnittstelle zur anderen Kommunikationsschnittstelle änderbar sind. Dadurch kann erreicht werden, dass auch die Registrierung beim Wechsel der Kommunikationsschnittstelle aktuell gehalten werden kann und die entsprechenden Nutzdaten auch beim Wechsel der Kommunikationsschnittstelle an den richtigen Kommunikationspartner übertragen werden können.

Das Kommunikationsendgerät ist bevorzugt als Multi-Mode-Terminal, insbesondere als mobiler Multi-Mode-Terminal, ausgebildet. Gerade bei derart mobilen Kommunikationsendgeräten kann die sichere und stetige Kommunikation zwischen den Kommunikationspartnern durch die Erfindung erreicht werden.

Es ist auch möglich, das Kommunikationsmodul in zwei Funktionalitäten (Sub-Module) aufzuteilen. Ein Teil des Kommunikationsmoduls ist einem Signalisierungsprotokollmodul, insbesondere einem SIP, zugeordnet und ein zweiter Teil des Kommunikationsmoduls ist einem Transportprotokollmodul, insbesondere einem RTP, zugeordnet. Diese beiden Sub-Module können unabhängig voneinander existieren. Dadurch ist eine weitere Verbesserung der Datenübertragung bei Kommunikationsendgeräte möglich.

Bei einem Verfahren zur Datenübertragung zwischen einem Kommunikationsendgerät und einem Kommunikationssystem in einem Datennetz, wird die Datenübertragung über zumindest zwei Kommunikationsschnittstellen durchgeführt. Das Kommunikationsendgerät umfasst eine erste und zumindest eine zweite Kommunikationsschnittstelle. Nutzdaten werden über eine der beiden Kommunikationsschnittstellen über ein Transportprotokollmodul des Kommunikationsendgeräts übertragen. Ein wesentlicher Gedanke der Erfindung besteht darin, dass durch ein zwischen dem Transportprotokollmodul und den beiden Kommunikationsschnittstellen angeordnetes Kommunikationsmodul eine über eine der beiden Kommunikationsschnittstellen zwischen dem Kommunikationsendgerät und dem Kommunikationssystem aufgebaute aktive Sitzungsverbindung ohne Unterbrechung als aktive Sitzungsverbindung zwischen dem Kommunikationsendgerät und dem Kommunikationssystem über die weitere Kommunikationsschnittstelle übergeben wird. Dadurch kann eine zuverlässige Kommunikation zwischen den Kommunikationspartnern auch dann erreicht werden, wenn während der Kommunikation eine Kommunikationsschnittstelle gewechselt wird.

Weitere vorteilhafte Ausgestaltungen der Erfindung sind in den Unteransprüchen angegeben. Vorteilhafte Ausgestaltungen des Kommunikationsendgeräts sind, soweit im Übrigen auf das Verfahren übertragbar, auch als vorteilhafte Ausgestaltungen des Verfahrens anzusehen.

Die Erfindung wird nachfolgend anhand schematischer Zeichnungen näher erläutert. Es zeigen:
- FIG 1: eine schematische Darstellung einer Kommunikation zwischen einem Kommunikationsendgerät und einem Kommunikationssystem gemäß dem Stand der Technik;
- FIG 2: eine Blockbilddarstellung eines Teilbereichs eines Kommunikationsendgeräts gemäß einer beispielhaften Ausführungsform der Erfindung;
- FIG 3: eine schematische Darstellung einer Kommunikation zwischen einem Kommunikationsendgerät und einem Kommunikationssystem gemäß einer beispielhaften Ausführungsform der Erfindung; und
- FIG 4: eine schematische Darstellung einer mobilen Verwendung eines Kommunikationsendgerät.

In den FIG 1 bis 4 werden gleiche oder funktionsgleiche Elemente mit gleichen Bezugszeichen versehen.

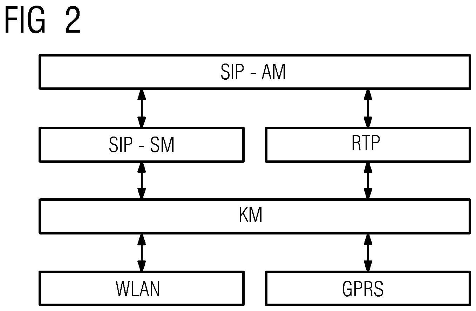

In FIG 2 ist eine schematische Darstellung der wesentlichen Elemente eines Kommunikationsendgeräts gemäß einer beispielhaften Ausführungsform gezeigt. Das Kommunikationsendgerät ist im Ausführungsbeispiel als MMT ausgebildet. Wie aus der Darstellung in FIG 2 zu erkennen ist, umfasst das MMT eine erste Kommunikationsschnittstelle, welche im Ausführungsbeispiel als GPRS-Kommunikationsschnittstelle ausgebildet ist. Des Weiteren umfasst das MMT eine zweite Kommunikationsschnittstelle, welche im Ausführungsbeispiel als WLAN-Kommunikationsschnittstelle ausgebildet ist. Über diese beiden Kommunikationsschnittstellen kann das MMT mit einem Kommunikationssystem KS Nutzdaten und Signalisierungsinformationen austauschen. Wie des Weiteren aus FIG 2 zu erkennen ist, weist das MMT ein Applikationsmodul auf, welches im Ausführungsbeispiel als SIP-Applikationsmodul SIP-AM ausgebildet ist. Dieses SIP-Applikationsmodul SIP-AM ist zum Austausch von Registrierungsinformationen mit einem Stapelmodul, welches im Ausführungsbeispiel als SIP-Stapelmodul SIP-SM ausgebildet ist, verbunden. Des Weiteren ist das SIP-Applikationsmodul SIP-AM mit einem Transportprotokollmodul zum Übertragen von Nutzdaten verbunden. Das Transportprotokollmodul ist im Ausführungsbeispiel als RTP (Real Time Transfer Protocol)-Modul RTP ausgebildet.

Das MMT umfasst ein Kommunikationsmodul KM, welches zwischen dem RTP-Modul RTP sowie dem SIP-Stapelmodul SIP-SM und der WLAN-Kommunikationsschnittstelle sowie der GPRS-Kommunikationsschnittstelle angeordnet ist. Dieses Kommunikationsmodul KM ist derart ausgebildet, dass eine aktive Sitzungsverbindung zum Austausch von Nutzdaten zwischen dem MMT und dem Kommunikationssystem KS über die WLAN-Kommunikationsschnittstelle ohne Unterbrechung als aktive Sitzungsverbindung zwischen dem MMT und dem Kommunikationssystem KS über die GPRS-Kommunikationsschnittstelle übergebbar ist. Durch das Kommunikationsmodul KM kann somit erreicht werden, dass eine bestehende aktive Verbindung über eine der beiden Kommunikationsschnittstellen zwischen dem MMT und dem Kommunikationssystem KS aufrechterhalten werden kann und unterbrechungslos übergeben werden kann derart, dass die weitere Kommunikation über die weitere zweite Kommunikationsschnittstelle erfolgt. Die Nutzdaten können somit von dem SIP-Applikationsmodul SIP-AM über das RTP-Modul RTP und dem Kommunikationsmodul KM über die GPRS-Kommunikationsschnittstelle zum Kommunikationssystem KS übertragen werden, wobei die dabei aufgebaute aktive Sitzungsverbindung bestehen bleibt, wenn ein Wechsel der Kommunikationsschnittstellen erfolgt und fortan die Übertragung dieser Nutzdaten über die WLAN-Kommunikationsschnittstelle erfolgen soll. Analog gilt dies für einen Wechsel von der WLAN-Kommunikationsschnittstelle auf die GPRS-Kommunikationsschnittstelle.

Das Kommunikationsmodul KM ist derart ausgestaltet, dass die Übergabe der aktiven Verbindung von einer der Kommunikationsschnittstellen auf die andere in automatischer Weise durchgeführt werden kann. Das Kommunikationsmodul KM sendet dabei einen Wiederaufrufbefehl an das Kommunikationssystem KS aus. Im Ausführungsbeispiel ist das Kommunikationsmodul KM als lokaler SIP-Proxy-Server ausgebildet.

Durch das RTP-Modul RTP kann das Übertragen der Nutzdaten ermöglicht werden. Eine RTP-Sitzungsverbindung wird durch eine IP-Adresse und zwei Ports identifiziert, wobei einer der Ports für die Nutzdaten und der andere Port für die Übertragung von RTCP (Real Time Transfer Control Protocol)-Informationen ausgebildet ist. Das RTP-Modul RTP ist in einem UDP (User Datagram Protocol)-Modul enthalten.

Wie bereits erwähnt, erfolgt der Austausch der Nutzdaten über das RTP-Modul RTP und dem Kommunikationsmodul KM, wobei dabei ein sogenannter socket (IP-Adresse und Port) durch das Kommunikationsmodul KM zum SIP-Applikationsmodul SIP-AM geöffnet wird, wobei dieses SIP-Applikationsmodul SIP-AM während der gesamten aktiven Verbindung bzw. während der gesamten Sitzungsverbindung unverändert bleibt. Das Kommunikationsmodul KM modifiziert die Nutzdaten entsprechend den Anforderungen und übersendet die korrekten Informationen (verwendete IP-Adresse des entsprechenden Kommunikationsmoduls und den Port) zu einem IMS-Server und zu dem Kommunikationspartner, welcher im Ausführungsbeispiel durch das Kommunikationssystem KS dargestellt ist.

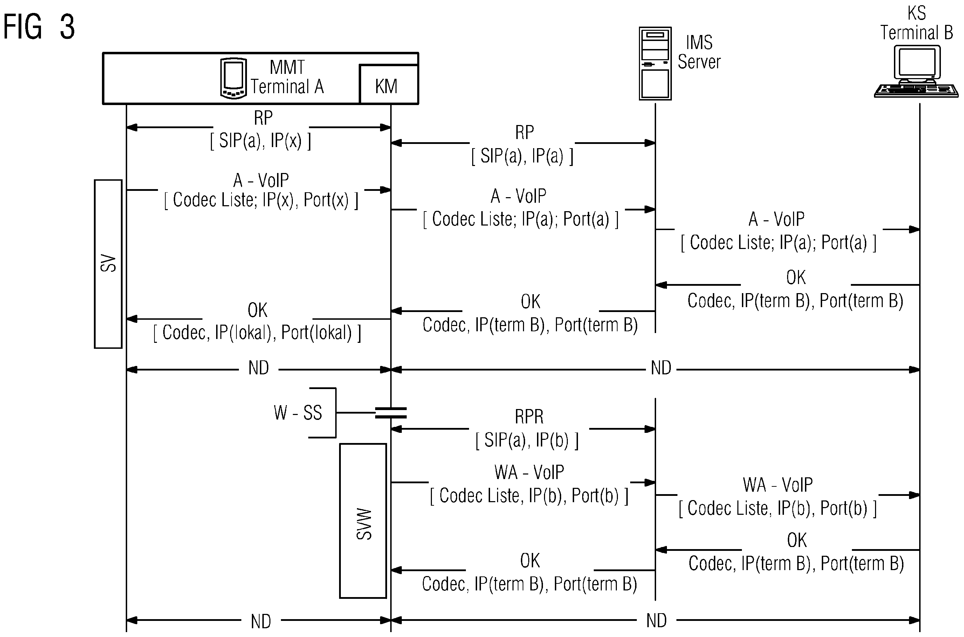

In FIG 3 ist eine schematische Darstellung eines Kommunikationsablaufs zwischen dem MMT mit dem Kommunikationsmodul KM und einem Kommunikationssystem KS dargestellt. Wie dabei in FIG 3 zu erkennen ist, erfolgt der Aufbau einer Sitzungsverbindung SV dadurch, dass bei einem Registrierungsprozess RP Registrierungsinformationen SIP(a), IP(x) und Portinformationen Port (x) über dieses Kommunikationsmodul KM an den IMS-Server übertragen werden. Der IMS-Server hat dabei alle erforderlichen Komponenten zum Durchführen eines derartigen Registrierungsprozesses, wie beispielsweise Registratur, Proxy, Re-Direct-Server, etc.. Nach der Registrierung kann das MMT das Kommunikationssystem KS zum Durchführen einer Voice-over-IP Sitzungsverbindung mit einem entsprechenden Befehl A-VoIP aufrufen. Diese dabei erzeugten Informationen (Codec Liste, IP(x) und Port(x), welche SDP (Session Description Protocol)-Informationen sind) werden über das Kommunikationsmodul KM als Aufrufinformationen (Codec Liste; IP(a), Port(a)) über den IMS-Server an das Kommunikationssystem KS übertragen, da der IMS-Server die korrekte IP-Adresse des Kommunikationssystems KS kennt. Nachdem der Aufruf durch das MMT vom Kommunikationssystem KS akzeptiert wird, und eine entsprechende Rückmeldung OK (Informationen Codec; IP(term B); Port(term B)) über die Bereitschaft einer Kommunikation über den IMS-Server über das Kommunikationsmodul KM des MMT an das MMT übertragen wird (Informationen Codec; IP(lokal); Port(lokal)), ist eine bestehende aktive Sitzungsverbindung SV aufgebaut und das MMT und das Kommunikationssystem KS können Nutzdaten ND direkt miteinander austauschen. Wie dabei in FIG 3 zu erkennen ist, werden diese Nutzdaten ND gemäß der Erfindung über das Kommunikationsmodul KM ausgetauscht.

Wird nun die Kommunikationsschnittstelle, über welche der Austausch der Nutzdaten durchgeführt wird, geändert (Schnittstellenwechsel W-SS), in dem das MMT aufgrund seiner mobilen Bewegung in einen Bereich gelangt, in dem die Kommunikation über die andere Kommunikationsschnittstelle besser ist, ist das Kommunikationsmodul KM in der Lage, die bestehende aktive Sitzungsverbindung SV ohne Unterbrechung zu übergeben und insbesondere das Übertragen der Nutzdaten über die andere Kommunikationsschnittstelle zu gewährleisten.

Das Kommunikationsmodul KM leitet dabei in automatischer Weise einen Re-Registrierungsprozess RPR ein, in dem ein Wiederaufrufbefehl WA-VoIP über den IMS-Server an das Kommunikationssystem KS übertragen wird. Dabei werden bei dieser Re-Registrierung RPR die Informationen SIP(a), IP(b) an den IMS-Server und die Informationen Codec Liste, IP(b), Port(b) über den IMS-Server an das Kommunikationssystem KS übertragen. Wird dies wiederum durch das Kommunikationssystem KS bestätigt (OK), ist eine Sitzungsverbindung SVW aktiv und es kann der Austausch von Nutzdaten über die andere Kommunikationsschnittstelle erfolgen. Das SIP-Applikationsmodul SIP-AM ist dabei nicht involviert und ist quasi weiter der Ansicht, dass die Übertragung der Nutzdaten weiterhin über die erste Kommunikationsschnittstelle erfolgt.

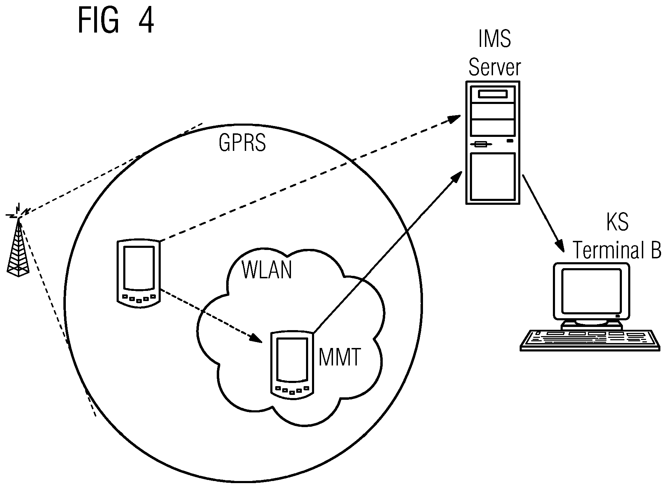

Eine vereinfachte bildhafte Darstellung eines Ablaufs beim Ändern der Kommunikationsschnittstelle zwischen MMT und dem Kommunikationssystem KS ist in FIG 4 gezeigt. Auch hier wird beispielhaft davon ausgegangen, dass das MMT eine WLAN-Kommunikationsschnittstelle und eine GPRS-Kommunikationsschnittstelle aufweist. Gemäß der Darstellung in FIG 4 befindet sich das MMT zunächst außerhalb eines WLAN-Netzknotenpunktes und lediglich innerhalb eines GPRS-Bereichs. Unter diesen Gegebenheiten wird das MMT versuchen, eine SIP-Sitzungsverbindung mit dem Kommunikationssystem KS über die GPRS-Kommunikationsschnittstelle zu erzeugen. In diesem Bereich ist die WLAN-Kommunikationsschnittstelle inaktiv. Wie bereits zur Darstellung in FIG 3 erläutert, registriert sich das MMT selbständig am IMS-Server über das Kommunikationsmodul KM. Danach wird eine Sitzungsverbindung mit dem Kommunikationssystem KS über eine Standard-SIP-Prozedur aufgebaut. Wird nun dieses MMT in den Bereich des WLAN-Netzknotens bewegt, registriert sich das MMT selbständig mit dem WLAN-Netzknoten und aktiviert seine WLAN-Kommunikationsschnittstelle. Ist beispielsweise über einen Operator vorgegeben, dass die WLAN-Kommunikationsschnittstelle die zu priorisierende gegenüber der GPRS-Kommunikationsschnittstelle ist, so wird der Re-Registrierungsprozess über die WLAN-Kommunikationsschnittstelle durch das Kommunikationsmodul KM ausgeführt. Des Weiteren aktualisiert das Kommunikationsmodul KM seine Datenbank am IMS-Server, so dass ein Zugriff durch das Kommunikationssystem KS ermöglicht wird. Gleichzeitig wird die laufende Sitzungsverbindung an die neue Kommunikationsschnittstelle, im Ausführungsbeispiel an die WLAN-Kommunikationsschnittstelle, übergeben. Diese erfolgt, wie erläutert derart, dass ein Wiederaufrufbefehl zum Kommunikationssystem KS übertragen wir, ohne dass die bestehende aktive Sitzungsverbindung bzw. die laufende SIP-Applikation unterbrochen wird.

In der Erfindung kann ebenso vorgesehen sein, dass das Kommunikationsmodul KM derart ausgebildet ist, dass der Registrierungs- und Signalisierungsprozess RP (FIG 3) über die GPRS-Kommunikationsschnittstelle erfolgt und die Übertragung der Nutzdaten über die WLAN-Kommunikationsschnittstelle durchgeführt wird. Analog kann auch vorgesehen sein, dass die Nutzdaten über die GPRS-Kommunikationsschnittstelle und die Registrierungs- und Signalisierungsinformationen über die WLAN-Kommunikationsschnittstelle übertragen werden.

Durch das Kommunikationsmodul KM in dem Kommunikationsendgerät kann erreicht werden, dass alle Standard-SIP-Applikationen unterstützt werden, solange der Prozess standardkonform abläuft. Darüber hinaus müssen keine Änderungen an den Applikationen durchgeführt werden, solange die Applikationen, insbesondere die SIP-Applikationen, entweder das Stapelmodul, insbesondere das SIP-Stapelmodul SIP-SM (FIG 2), oder das RTP-Modul RTP (FIG 2) kontaktieren. Durch das Kommunikationsmodul KM kann gewährleistet werden, dass auch dann, wenn eine aktive Sitzungsverbindung über eine erste Kommunikationsschnittstelle verloren geht über eine zweite Kommunikationsschnittstelle unterbrechungslos aufrechterhalten werden kann. Darüber hinaus kann mit dem Kommunikationsmodul KM erreicht werden, dass die Last über die verschiedenen Kommunikationsschnittstellen ausgeglichen werden können. Das Kommunikationsmodul KM ist quasi transparent zu den Applikationen und agiert in Form eines Gateways. Darüber hinaus ist das Kommunikationsmodul KM derart ausgestaltet, dass es in optimierter Weise die Auswahl der unterschiedlichen Kommunikationsschnittstellen für den Austausch von Nutzdaten und Signalisierungsinformationen durchführen kann und dies in unabhängiger Weise erfolgen kann. Dies bedeutet, dass die Auswahl einer passenden Kommunikationsschnittstelle für den Austausch der Registrierungs- bzw. Signalisierungsinformationen unabhängig von der Auswahl einer passenden Kommunikationsschnittstelle zum Übertragen der Nutzdaten erfolgen kann.

Das Kommunikationssystem KS kann ebenfalls als MMT oder als Mobilfunkendgerät ausgebildet sein. Auch die im Ausführungsbeispiel genannten Kommunikationsschnittstellen sind lediglich beispielhaft.

Im Hinblick auf die Anordnung des Kommunikationsmoduls KM innerhalb des Schichtenmodells gemäß OSI ist dieses Kommunikationsmodul KM zwischen der Applikationsebene und der Transportebene angeordnet.

### Bezugszeichenliste

- GPRS, WLAN: Kommunikationsschnittstellen
- KM: Kommunikationsmodul
- KS: Kommunikationssystem
- MMT: Kommunikationsendgerät (Multi-Mode-Terminal)
- SV, SVW: Sitzungsverbindung
- RP: Registrierungsprozess
- A-VoIP: Aufrufbefehl für eine Voice-over-IP Kommunikation
- WA-VoIP: Wiederaufrufbefehl für eine Voice-over-IP Kommunikation
- OK: Rückmeldung des Kommunikationssystems KS
- W-SS: Wechsel der Kommunikationsschnittstelle
- SIP-AM: SIP-Applikationsmodul
- SIP-SM: SIP-Stapelmodul
- RTP: RTP-Modul
- ND: Nutzdaten

## Patentansprüche

1. Kommunikationsendgerät, welches
- eine erste und zumindest eine zweite Kommunikationsschnittstelle zur Kommunikation mit einem Kommunikationssystem (KS) aufweist, und
- ein Transportprotokollmodul (RTP) zum Übertragen von Nutzdaten zwischen dem Kommunikationsendgerät (MMT) und dem Kommunikationssystem (KS) über zumindest eine der beiden Kommunikationsschnittstellen aufweist, wobei ein Kommunikationsmodul (KM), welches zwischen dem Transportprotokollmodul (RTP) und den beiden Kommunikationsschnittstellen angeordnet ist, derart ausgebildet ist, dass eine über eine der beiden Kommunikationsschnittstellen zwischen dem Kommunikationsendgerät (MMT) und dem Kommunikationssystem (KS) aufgebaute aktive Sitzungsverbindung (SV; SVW) ohne Unterbrechung dieser als aktive Sitzungsverbindung (SV; SVW) zwischen dem Kommunikationsendgerät (MMT) und dem Kommunikationssystem (KS) über die weitere Kommunikationsschnittstelle übergeben wird, **dadurch gekennzeichnet, dass** das Kommunikationsmodul (KM) zur Übergabe der aktiven Sitzungsverbindung (SV; SVW) ohne Involvierung eines zum Austausch von Registrierungsinformationen und zum Übertragen von Nutzdaten verbundenen SIP-Applikationsmoduls ausgelegt ist, indem das Kommunikationsmodul (KM) in automatischer Weise einen Re-Registrierungsprozess RPR einleitet, in dem die Informationen SIP(a), IP(b) an einen IMS-Server und die Informationen Codec Liste, IP(b), Port(b) über den IMS-Server an das Kommunikationssystem KS übertragen werden.

2. Kommunikationsendgerät nach Anspruch 1,
**dadurch gekennzeichnet, dass**
die aktive Sitzungsverbindung (SV; SVW) zur Übertragung von Nutzdaten (ND) ausgelegt ist.

3. Kommunikationsendgerät nach Anspruch 1 oder 2,
**dadurch gekennzeichnet, dass**
das Kommunikationsmodul (KM) zum automatischen Aufrechterhalten der aktiven Sitzungsverbindung (SV; SVW) beim Übergeben von einer der Kommunikationsschnittstellen auf die andere Kommunikationsschnittstelle ausgebildet ist.

4. Kommunikationsendgerät nach einem der vorhergehenden Ansprüche,
**dadurch gekennzeichnet, dass**
das Kommunikationsmodul (KM) zum Aufrechterhalten der aktiven Sitzungsverbindung (SV; SVW) beim Wechsel der Kommunikationsschnittstelle derart ausgebildet ist, dass automatisch ein Wiederaufrufbefehl (WA-VoIP) an das Kommunikationssystem (KS) gesendet wird.

5. Kommunikationsendgerät nach einem der vorhergehenden Ansprüche,
**dadurch gekennzeichnet, dass**
das Kommunikationsmodul (KM) als lokaler Proxy-Server, insbesondere als lokaler SIP-Proxy-Server, ausgebildet ist.

6. Kommunikationsendgerät nach einem der vorhergehenden Ansprüche,
**dadurch gekennzeichnet, dass**
das Transportprotokollmodul (RTP) zwischen dem Kommunikationsmodul (KM) und des Applikationsmoduls angeordnet ist.

7. Kommunikationsendgerät nach einem der vorhergehenden Ansprüche,
**dadurch gekennzeichnet, dass**
das Kommunikationsmodul (KM) zum Austausch von Registrierungsinformationen des Kommunikationsendgeräts (MMT) mit dem Kommunikationssystems (KS) ausgebildet ist.

8. Kommunikationsendgerät nach Anspruch 7, **dadurch gekennzeichnet, dass**
die Registrierungsinformationen zwischen dem Kommunikationsendgerät (MMT) und dem Kommunikationssystem (KS) über einen separaten Server (IMS) austauschbar sind.

9. Kommunikationsendgerät nach Anspruch 7 oder 8, **dadurch gekennzeichnet, dass**
das Kommunikationsmodul (KM) derart ausgebildet ist, dass die Registrierungsinformationen bei einer Übergabe der aktiven Sitzungsverbindung (SV; SVW) von einer Kommunikationsschnittstelle zur anderen Kommunikationsschnittstelle änderbar sind.

10. Kommunikationsendgerät nach Anspruch 6 und 7, **dadurch gekennzeichnet, dass**
zwischen dem Applikationsmodul und dem Kommunikationsmodul (KM) ein Stapelmodul, insbesondere ein SIP-Stapelmodul (SIP-SM), angeordnet ist, über das die Registrierungsinformationen an das Kommunikationsmodul (KM) übertragbar sind.

11. Kommunikationsendgerät nach einem der vorhergehenden Ansprüche, welches als Multi-Mode-Terminal (MMT), insbesondere als mobiles Multi-Mode-Terminal, ausgebildet ist.

12. Verfahren zur Datenübertragung zwischen einem Kommunikationsendgerät (MMT) und einem Kommunikationssystem (KS) in einem Datennetz, wobei eine Datenübertragung über zumindest zwei Kommunikationsschnittstelle durchgeführt wird und Nutzdaten über eine der beiden Kommunikationsschnittstellen über ein Transportprotokollmodul (RTP) des Kommunikationsendgeräts (MMT) übertragen werden, wobei ein Kommunikationsmodul (KM) zwischen dem Transportprotokollmodul (RTP) und den beiden Kommunikationsschnittstellen angeordnet wird und durch das Kommunikationsmodul (KM) eine über eine der beiden Kommunikationsschnittstellen zwischen dem Kommunikationsendgerät (MMT) und dem Kommunikationssystem (KS) aufgebaute aktive Sitzungsverbindung (SV; SVW) ohne Unterbrechung dieser als aktive Sitzungsverbindung (SV; SVW) zwischen dem Kommunikationsendgerät (MMT) und dem Kommunikationssystem (KS) über die weitere Kommunikationsschnittstelle übergeben wird, **dadurch gekennzeichnet, dass** das Kommunikationsmodul (KM) die aktive Sitzungsverbindung (SV; SVW) ohne Involvierung eines zum Austausch von Registrierungsinformationen und zum Übertragen von Nutzdaten verbundenen SIP- Applikationsmoduls übergibt, indem es in automatischer Weise einen Re-Registrierungsprozess RPR einleitet, in dem die Informationen SIP(a), IP(b) an einen IMS-Server und die Informationen Codec Liste, IP(b), Port(b) über den IMS-Server an das Kommunikationssystem KS übertragen werden.

13. Verfahren nach Anspruch 12, **dadurch gekennzeichnet, dass**
über die aktive Sitzungsverbindung (SV; SVW) Nutzdaten (ND) übertragen werden.

14. Verfahren nach Anspruch 12 oder 13, **dadurch gekennzeichnet, dass**
die aktive Sitzungsverbindung (SV; SVW) beim Übergeben von einer der Kommunikationsschnittstellen auf die andere Kommunikationsschnittstelle durch das Kommunikationsmodul (KM) automatischen aufrechterhalten wird.

15. Verfahren nach einem der Ansprüche 12 bis 14, **dadurch gekennzeichnet, dass**
zum Aufrechterhalten der aktiven Sitzungsverbindung (SV; SVW) beim Wechsel der Kommunikationsschnittstelle ein Wiederaufrufbefehl (WA-VoIP) durch das Kommunikationsmodul (KM) an das Kommunikationssystem (KS) automatisch gesendet wird.

16. Verfahren nach einem der Ansprüche 12 bis 15, **dadurch gekennzeichnet, dass**
das Transportprotokollmodul (RTP) zwischen dem Kommunikationsmodul (KM) und desApplikationsmoduls angeordnet ist und Nutzdaten (ND) zwischen dem Kommunikationsmodul (KM) und dem Applikationsmodul ausgetauscht werden.

17. Verfahren nach Anspruch 16, **dadurch gekennzeichnet, dass**
Registrierungsinformationen über ein Stapelmodul, insbesondere ein SIP-Stapelmodul (SIP-SM), an das Kommunikationsmodul (KM) übertragbar sind, wobei das Stapelmodul zwischen dem Applikationsmodul und dem Kommunikationsmodul (KM) angeordnet ist.

## Claims

1. Communications terminal, comprising
- one first and at least one second communications interface for communicating with a communications system (KS), and
- a transport protocol module (RTP) for transferring reference data between the communications terminal (MMT) and the communications system (KS) via at least one of the two communications interfaces, wherein
a communications module (KM) which is arranged between the transport protocol module (RTP) and the two communications interfaces is configured such that an active session connection (SV; SVW) established via one of the two communications interfaces between the communications terminal (MMT) and the communications system (KS) is transferred without interruption thereof as an active session connection (SV; SVW) between the communications terminal (MMT) and the communications system (KS) via the further communications interface,
**characterised in that** the communications module (KM) is designed for transferring the active session connection (SV; SVW) without involving an SIP application module connected for exchanging registration information and for transferring reference data, **in that** the communications module (KM) automatically initiates a re-registration process RPR in which the information SIP(a), IP(b) is transferred to an IMS server and the information Codec List, IP(b), Port(b) is transferred to the communications system KS via the IMS server.

2. Communications terminal as claimed in claim 1, **characterised in that** the active session connection (SV; SVW) is designed for transferring reference data (ND).

3. Communications terminal as claimed in claim 1 or 2, **characterised in that** the communications module (KM) is designed for automatically maintaining the active session connection (SV; SVW) during transfer from one of the communications interfaces to the other communications interface.

4. Communications terminal as claimed in any one of the preceding claims, **characterised in that** the communications module (KM) is designed for maintaining the active session connection (SV; SVW) during the change in communications interface such that a recall command (WA-VoIP) is automatically sent to the communications system (KS).

5. Communications terminal as claimed in any one of the preceding claims, **characterised in that** the communications module (KM) is configured as a local proxy server, in particular as a local SIP proxy server.

6. Communications terminal as claimed in any one of the preceding claims, **characterised in that** the transport protocol module (RTP) is arranged between the communications module (KM) and the application module.

7. Communications terminal as claimed in any one of the preceding claims, **characterised in that** the communications module (KM) is configured for exchanging registration information of the communications terminal (MMT) with the communications system (KS).

8. Communications terminal as claimed in claim 7, **characterised in that** the registration information can be exchanged between the communications terminal (MMT) and the communications system (KS) via a separate server (IMS).

9. Communications terminal as claimed in claim 7 or 8, **characterised in that** the communications module (KM) is configured such that the registration information can be changed from one communications interface to the other communications interface when transferring the active session connection (SV; SVW).

10. Communications terminal as claimed in claims 6 and 7, **characterised in that** a stack module, in particular an SIP stack module (SIP-SM) is arranged between the application module and the communications module (KM), the registration information being able to be transferred to the communications module (KM) via the stack module.

11. Communications terminal as claimed in any one of the preceding claims which is configured as a multi-mode terminal (MMT), in particular as a mobile multi-mode terminal.

12. Method for transferring data between a communications terminal (MMT) and a communications system (KS) in a data network, wherein data are transferred via at least two communications interfaces and reference data are transferred via one of the two communications interfaces via a transport protocol module (RTP) of the communications terminal (MMT), wherein
a communications module (KM) is arranged between the transport protocol module (RTP) and the two communications interfaces and by way of the communications module (KM) an active session connection (SV; SVW) established via one of the two communications interfaces between the communications terminal (MMT) and the communications system (KS) is transferred without interruption thereof as an active session connection (SV; SVW) between the communications terminal (MMT) and the communications system (KS) via the further communications interface, **characterised in that** the communications module (KM) transfers the active session connection (SV; SVW) without involving an SIP application module connected for exchanging registration information and for transferring reference data, **in that** it automatically initiates a re-registration process RPR in which the information SIP(a), IP(b) is transferred to an IMS server and the information Codec List, IP(b), Port(b) is transferred to the communications system KS via the IMS server.

13. Method as claimed in claim 12, **characterised in that** reference data (ND) are transferred via the active session connection (SV; SVW).

14. Method as claimed in claim 12 or 13, **characterised in that** the active session connection (SV; SVW) is automatically maintained by the communications module (KM) during transfer from one of the communications interfaces to the other communications interface.

15. Method as claimed in any one of claims 12 to 14, **characterised in that** a recall command (WA-VoIP) is automatically sent to the communications system (KS) by the communications module (KM) in order to maintain the active session connection (SV; SVW) during the change in communications interface.

16. Method as claimed in any one of claims 12 to 15, **characterised in that** the transport protocol module (RTP) is arranged between the communications module (KM) and the application module and reference data (ND) are exchanged between the communications module (KM) and the application module.

17. Method as claimed in claim 16, **characterised in that** registration information can be transferred to the communications module (KM) via a stack module, in particular an SIP stack module (SIP-SM), wherein the stack module is arranged between the application module and the communications module (KM).

## Revendications

1. Terminal de communications, comprenant
- une première et au moins une deuxième interfaces de communications pour communiquer avec un système de communications (KS), et
- un module à protocole de transport (RTP) pour transférer des données de référence entre le terminal de communications (MMT) et le système de communications (KS) via au moins une des deux interfaces de communications, dans lequel
un module de communications (KM), qui est agencé entre le module à protocole de transport (RTP) et les deux interfaces de communications, est configuré de telle sorte qu'une connexion de session active (SV ; SVW) établie via une des deux interfaces de communications entre le terminal de communications (MMT) et le système de communications (KS) est transférée sans interruption de celle-ci en tant que connexion de session active (SV ; SVW) entre le terminal de communications (MMT) et le système de communications (KS) via l'interface de communications supplémentaire,
**caractérisé en ce que** le module de communications (KM) est conçu de façon à transférer la connexion de session active (SV ; SVW) sans faire intervenir un module à application SIP connecté pour échanger des informations d'enregistrement et pour transférer des données de référence, **en ce que** le module de communications (KM) amorce automatiquement un processus de ré-enregistrement RPR dans lequel les informations SIP(a), IP(b) sont transférées à un serveur IMS et les informations de Liste Codée, IP(b), Port(b) sont transférées au système de communications KS via le serveur IMS.

2. Terminal de communications selon la revendication 1, **caractérisé en ce que** la connexion de session active (SV ; SVW) est conçue de façon à transférer des données de référence (ND).

3. Terminal de communications selon la revendication 1 ou 2, **caractérisé en ce que** le module de communications (KM) est conçu de façon à maintenir automatiquement la connexion de session active (SV ; SVW) durant le transfert à partir de l'une des interfaces de communications vers l'autre interface de communications.

4. Terminal de communications selon l'une quelconque des revendications précédentes, **caractérisé en ce que** le module de communications (KM) est conçu de façon à maintenir la connexion de session active (SV ; SVW) lors du changement de l'interface de communications de telle sorte qu'une commande de rappel (WA-VoIP) soit envoyée automatiquement au système de communications (KS).

5. Terminal de communications selon l'une quelconque des revendications précédentes, **caractérisé en ce que** le module de communications (KM) est configuré en tant que serveur mandataire local, en particulier en tant que serveur mandataire SIP local.

6. Terminal de communications selon l'une quelconque des revendications précédentes, **caractérisé en ce que** le module à protocole de transport (RTP) est agencé entre le module de communications (KM) et le module à application.

7. Terminal de communications selon l'une quelconque des revendications précédentes, **caractérisé en ce que** le module de communications (KM) est configuré de façon à échanger des informations d'enregistrement du terminal de communications (MMT) avec le système de communications (KS).

8. Terminal de communications selon la revendication 7, **caractérisé en ce que** les informations d'enregistrement peuvent être échangées entre le terminal de communications (MMT) et le système de communications (KS) via un serveur séparé (IMS).

9. Terminal de communications selon la revendication 7 ou 8, **caractérisé en ce que** le module de communications (KM) est configuré de telle sorte que les informations d'enregistrement peuvent être changées à partir d'une interface de communications vers l'autre interface de communications au moment du transfert de la connexion de session active (SV ; SVW).

10. Terminal de communications selon les revendications 6 et 7, **caractérisé en ce qu'**un module d'empilement, en particulier un module d'empilement SIP (SIP-SM) est agencé entre le module à application et le module de communications (KM), les informations d'enregistrement étant aptes à être transférées au module de communications (KM) via le module d'empilement.

11. Terminal de communications selon l'une quelconque des revendications précédentes qui est configuré en tant que terminal à modes multiples (MMT), en particulier en tant que terminal mobile à modes multiples.

12. Procédé pour transférer des données entre un terminal de communications (MMT) et un système de communications (KS) dans un réseau de données, dans lequel des données sont transférées via au moins deux interfaces de communications et des données de référence sont transférées via une des deux interfaces de communications via un module à protocole de transport (RTP) du terminal de communications (MMT), dans lequel
un module de communications (KM) est agencé entre le module à protocole de transport (RTP) et les deux interfaces de communications et par l'intermédiaire du module de communications (KM) une connexion de session active (SV ; SVW) établie via une des deux interfaces de communications entre le terminal de communications (MMT) et le système de communications (KS) est transférée sans interruption de celle-ci en tant que connexion de session active (SV ; SVW) entre le terminal de communications (MMT) et le système de communications (KS) via l'interface de communications supplémentaire,
**caractérisé en ce que** le module de communications (KM) transfère la connexion de session active (SV ; SVW) sans faire intervenir un module à application SIP connecté pour échanger des informations d'enregistrement et pour transférer des données de référence, **en ce qu'**il amorce automatiquement un processus de ré-enregistrement RPR dans lequel les informations SIP(a), IP(b) sont transférées à un serveur IMS et les informations de Liste Codec, IP(b), Port(b) sont transférées au système de communications KS via le serveur IMS.

13. Procédé selon la revendication 12, **caractérisé en ce que** des données de référence (ND) sont transférées via la connexion de session active (SV ; SVW).

14. Procédé selon la revendication 12 ou 13, **caractérisé en ce que** la connexion de session active (SV ; SVW) est maintenue automatiquement par le module de communications (KM) durant le transfert à partir de l'une des interfaces de communications vers l'autre interface de communications.

15. Procédé selon l'une quelconque des revendications 12 à 14, **caractérisé en ce qu'**une commande de rappel (WA-VoIP) est envoyée automatiquement au système de communications (KS) par le module de communications (KM) afin de maintenir la connexion de session active (SV ; SVW) lors du changement de l'interface de communications.

16. Procédé selon l'une quelconque des revendications 12 à 15, **caractérisé en ce que** le module à protocole de transport (RTP) est agencé entre le module de communications (KM) et le module à application et des données de référence (ND) sont échangées entre le module de communications (KM) et le module à application.

17. Procédé selon la revendication 16, **caractérisé en ce que** des informations d'enregistrement peuvent être transférées au module de communications (KM) via un module d'empilement, en particulier un module d'empilement SIP (SIP-SM), dans lequel le module d'empilement est agencé entre le module à application et le module de communications (KM).
